(19)

Europäisches
Patentamt
European
Patent Office
Office européen
des brevets

(11) **EP 4 686 209 A1**

(12) **EUROPEAN PATENT APPLICATION**

(43) Date of publication:
**28.01.2026  Bulletin 2026/05**

(21) Application number: **24306247.8**

(22) Date of filing: **24.07.2024**

(51) International Patent Classification (IPC):
***H04N 21/442*** (2011.01)   ***G06Q 10/06*** (2023.01)
***H04N 21/466*** (2011.01)   ***H04N 21/658*** (2011.01)

(52) Cooperative Patent Classification (CPC):
**H04N 21/442; G06Q 30/018; G06Q 50/06;
G06Q 50/26; H04N 21/4436; H04N 21/4667;
H04N 21/6582**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **REINHARD, Erik
  35630 HEDE-BAZOUGES (FR)**

• **DEMARTY, Claire-Helene
  35520 MONTREUIL LE GAST (FR)**
• **BLONDE, Laurent
  35235 THORIGNE-FOUILLARD (FR)**
• **AUMONT, Franck
  35770 VERN SUR SEICHE (FR)**
• **LE MEUR, Olivier
  35160 TALENSAC (FR)**

(74) Representative: **Rittner, Karsten
  Rittner & Partner
  Patentanwälte mbB
  Schiffgraben 17
  30159 Hannover (DE)**

(54) **DEVICE-REPORTED CARBON EMISSIONS**

(57)    Apparatuses and methods are described including techniques for assessing carbon emissions caused by the distribution and the consumption of media content. Techniques include determining a carbon intensity associated with a device displaying a video segment of a content received from a content provider, recording information indicative of energy spent by the device to display the video segment, and, then, transmitting an emission report generated based on the determined carbon intensity and the recorded information. Techniques further include transmitting content to devices, receiving emission reports, from those devices, corresponding to respective video segments of the content displayed by respective devices, and, then, aggregating information provided by the emission reports to obtain the emission amount caused by displaying, by the devices, at least a portion of the transmitted content.

910

| TRANSMIT CONTENT TO DEVICES |

920

| RECEIVE EMISSION REPORTS FROM THE DEVICES, EACH EMISSION REPORT IS WITH RESPECT TO A VIDEO SEGMENT OF THE CONTENT DISPLAYED BY A RESPECTIVE DEVICE |

930

| AGGREGATE INFORMATION PROVIDED BY THE EMISSION REPORTS TO OBTAIN A TOTAL EMISSION AMOUNT CAUSED BY DISPLAYING AT LEAST A PORTION OF THE TRANSMITTED CONTENT BY THE DEVICES |

**FIG. 9**
**900**

**Description**

BACKGROUND

Recent increase in media contents distributed to viewers leads to an increase in the energy spent to display these contents by the viewers' display devices. In turn, the increase in such energy consumption leads to an increase in greenhouse gas emissions. To mitigate climate change, industry players, the operations of whom cause that increase in greenhouse gas emissions, may be required to assess and report the amount of such emissions. This includes content providers, such as broadcasters, streaming platform operators, or any other content distributers. Greenhouse gas emission associated with a certain activity can be measured based on the energy spent to perform the activity and on carbon intensity. However, because the energy spent on displaying content depends on the display technology and because carbon intensity depends on the source(s) of power used to supply electricity to the device displaying the content, an accurate assessment of emissions caused by displaying contents by devices implemented by different display technologies and supplied by different power sources may be difficult.

SUMMARY

Aspects disclosed in the present disclosure describe methods for generating information regarding carbon emission caused by consumption of content. The methods comprise determining a carbon intensity associated with a device displaying a video segment of a content received from a content provider, and recording information indicative of energy spent by the device to display the video segment. Then, transmitting an emission report generated based on the determined carbon intensity and the recorded information. Aspects disclosed in the present disclosure also describe methods for aggregating information regarding carbon emissions caused by distribution of content. The methods comprise transmitting content to devices, and receiving emission reports from the devices. Each of the received emission reports is with respect to a video segment of the content displayed by a respective device. Then, aggregating information provided by the emission reports to obtain an emission amount caused by displaying, by the devices, at least a portion of the transmitted content.

Aspects disclosed in the present disclosure describe apparatuses for generating information regarding carbon emission caused by consumption of content. The apparatuses comprise at least one processor and memory storing instructions. The instructions, when executed by the at least one processor, cause the apparatuses to determine a carbon intensity associated with a device displaying a video segment of a content received from a content provider and to record information indicative of energy spent by the device to display the video segment. Then, to transmit an emission report generated based on the determined carbon intensity and the recorded information. Aspects disclosed in the present disclosure also describe apparatuses for aggregating information regarding carbon emissions caused by distribution of content. The apparatuses comprise at least one processor and memory storing instructions. The instructions, when executed by the at least one processor, cause the apparatuses to transmit content to devices, to receive emission reports from the devices. Each of the received emission reports is with respect to a video segment of the content displayed by a respective device. Then, to aggregate information provided by the emission reports to obtain an emission amount caused by displaying, by the devices, at least a portion of the transmitted content.

Aspects disclosed in the present disclosure describe a non-transitory computer-readable medium comprising instructions executable by at least one processor to perform methods for generating information regarding carbon emission caused by consumption of content. The methods comprise determining a carbon intensity associated with a device displaying a video segment of a content received from a content provider, and recording information indicative of energy spent by the device to display the video segment. Then, transmitting an emission report generated based on the determined carbon intensity and the recorded information. Aspects disclosed in the present disclosure also describe a non-transitory computer-readable medium comprising instructions executable by at least one processor to perform methods for aggregating information regarding carbon emissions caused by distribution of content. The methods comprise transmitting content to devices, and receiving emission reports from the devices. Each of the received emission reports is with respect to a video segment of the content displayed by a respective device. Then, aggregating information provided by the emission reports to obtain an emission amount caused by displaying, by the devices, at least a portion of the transmitted content.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to aspects of the present disclosure.

FIG. 2 is a flowchart illustrating a method for determining the carbon intensity associated with an electrical device, according to aspects of the present disclosure.

FIG. 3 is a flowchart illustrating a first method for tracking carbon emission caused by content consumption, according to aspects of the present disclosure.

FIG. 4 is a flowchart illustrating a second method for tracking carbon emission caused by content consumption, according to aspects of the present disclosure.

FIG. 5 is a flowchart illustrating a third method for tracking carbon emission caused by content consumption, according to aspects of the present disclosure.

FIG. 6 is a flowchart illustrating a first method for integrating emission reports received from consumers of content, according to aspects of the present disclosure.

FIG. 7 is a diagram illustrating a second method for integrating emission reports received from consumers of content, according to aspects of the present disclosure.

FIG. 8 is a flowchart illustrating a method for generating information regarding carbon emission caused by consumption of content, according to which aspects of the present embodiments can be implemented.

FIG. 9 is a flowchart illustrating a method for aggregating information regarding carbon emissions caused by distribution of content, according to which aspects of the present embodiments can be implemented.

DETAILED DESCRIPTION

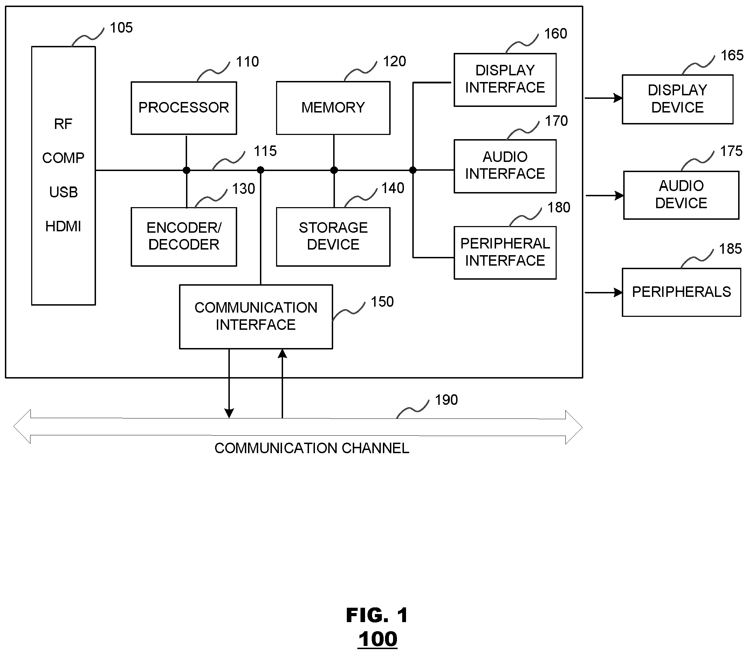

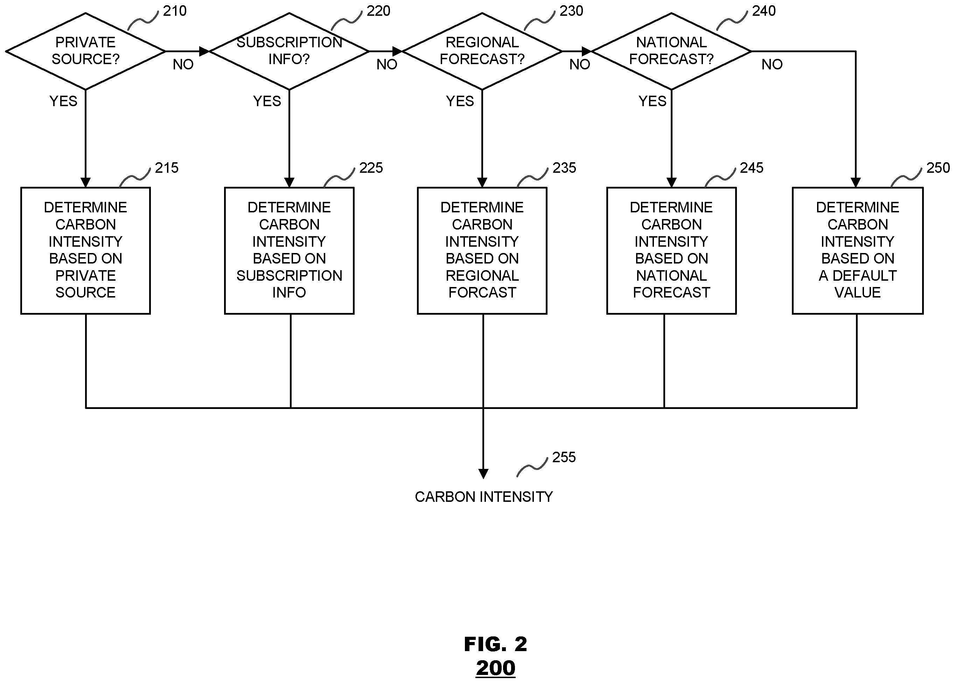

Apparatuses and methods are presented herein for assessing carbon emissions caused by the distribution and the consumption of media content (i.e., content). A system for processing and displaying content, with which various aspects and examples described herein may be implemented, is generally described in reference to FIG. 1, followed by a description of the aspects of the present disclosure in reference to FIGS. 2-9.

FIG. 1 illustrates a block diagram of an example system 100. System 100 can be embodied as a device including the various components described below and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in a single integrated circuit, multiple integrated circuits, and/or discrete components. For example, in at least one embodiment, the processing and encoder/decoder elements of system 100 are distributed across multiple integrated circuits and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120 (e.g., a volatile memory device and/or a non-volatile memory device). System 100 includes a storage device 140, which can include non-volatile memory and/or volatile memory, including, for example, EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 represents module(s) that can be included in a device to perform encoding and/or decoding functions. Additionally, the encoder/decoder module 130 can be implemented as a separate element of system 100 or can be incorporated within processor 110 as a combination of hardware and software as known to those skilled in the art.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes a communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data are streamed to the system 100, in various embodiments, using a Wi-Fi network such as IEEE 802.11. The Wi-Fi signal of these embodiments is received over the communication channel 190 and the communication interface 150 which are adapted for Wi-Fi communications. The communication channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, haptic devices, one or more of a stand-alone DVR, a disk player, a stereo system, a lighting system, and other devices that provide a function based on the output of the system 100. In various embodiments, control signals are communicated between the system 100 and the display device 165, the audio device 175, or other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

The display device 165 and the audio device 175 can alternatively be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

As part of the mitigation of climate change, the European Commission is increasingly requiring companies to report their greenhouse gas emissions. To this end, three scopes have been defined. The first scope (so-called Scope 1) includes direct emissions caused by one's facilities and vehicles. The second scope (so-called Scope 2) includes indirect emissions due to purchase of electricity, steam, heating, and cooling for own use. The third scope (so-called Scope 3) includes indirect emissions caused by one in the value chain, both upstream and downstream.

Scope 3 reporting is further broken down into a number of different classes - as described in the Greenhouse Gas (GHG) Protocol "Corporate Value Chain (Scope 3) Accounting and Reporting Standard," that is a supplement to the GHG Protocol Corporate Accounting and Reporting Standard. Therein, upstream activity categories in Scope 3 include: 1) purchased goods and services; 2) capital goods; 3) fuel-related and energy-related activities, not included in Scope 1 or in Scope 2; 4) upstream transportation and distribution; 5) waste generated in operations; 6) business travel; 7) employee commuting; and 8) upstream leased assets. These activity categories are followed by downstream activity categories in Scope 3, including: 9) downstream transportation and distribution; 10) processing of sold products; 11) use of sold products; 12) end-of-life treatment of sold products; 13) downstream leased assets; 14) franchises; and 15) investments.

According to dIMPACT, the categories included in Scope 3 that are relevant to broadcasters and media streaming companies are the first category of "purchased goods and services" and the eleventh category of "use of products sold" (see, "The dIMPACT Methdology" resource at https://dimpact.org/resource?resource=2). For example, consider a broadcaster transmitting content (e.g., an event live coverage, a movie, or a TV show) through digital terrestrial television (DTV). An end-user device such as a television receiving the content will use energy to display it, and, thereby, will cause an emission. Such emission is classified under Scope 3, category 11, that is, emission caused by "use of sold products." The reporting of Scope 3, category 11 emissions by a broadcaster is currently extremely difficult.

In a related art, techniques are described that enable broadcasters to estimate their indirect use phase emissions (i.e., Scope 3, category 11 emissions). Therein, evaluations are made - with respect to audience size and types of display technologies used by such an audience - to estimate the overall energy used to display a broadcasted content. The greenhouse gas emission caused by consuming that broadcasted content is then derived based on the estimated overall energy and the national gas emission intensity. In such an approach, only a coarse estimate of the greenhouse gas emission caused by a broadcaster can be made (see, European Patent Application 24305262.8, filed February 15, 2024, the content of which is incorporated herein in its entirety). In another related art, instead of relying on a coarse estimate, techniques are described that rely on information collected from devices to obtain respective energies spent to display received content. In this approach, a display device is configured to transmit back to a broadcaster data that are indicative of its energy consumption (see, European Patent Application 24315189.1, filed April 18, 2024, the content of which is incorporated herein in its entirety).

Aspects disclosed herein extend the above mentioned related arts, enabling a content provider to perform accurate assessment of greenhouse gas emissions associated with content viewed on display devices based on emission reports communicated back by the devices to the content provider (e.g., the broadcaster, the streaming platform operator, or any other content provider). While aspects disclosed herein are described with respect to display devices playing (or consuming) content, these aspects can also be applied to other device types, including, for example, appliances that consume energy, and thereby, cause emissions, the degree of which can be communicated to the appliance maker (i.e., manufacturer or designer).

Energy consumption can be an indicator of a corresponding greenhouse gas emission. For example, the average national gas emission intensity (e.g., in $g\,CO_2\text{-e}\,/\,kWh$) can be multiplied by the energy spent (e.g., in $kWh$) to obtain the amount of greenhouse gas emission (e.g., in $g\,CO_2\text{-e}$) caused by that energy consumption. This, however, does not take into consideration that: some energy providers have a cleaner energy mix than others, even within the same country; for the same location different operators may offer higher or lower "green" subscriptions; the energy mix may depend on the time of day (e.g., due to solar energy production) or on the current load on the grid. This means that greenhouse gas emissions associated with, for example, watching television, depend not only on the electricity (energy) consumed, but also on a multitude of other factors that determine how the electricity was generated and/or delivered.

According to aspects disclosed herein, techniques are described that associate an emission intensity (referred to herein also as carbon intensity) with a display device, taking into consideration the display device's operating circumstances, such as location, time of day, and energy source(s). The emission intensity can be communicated to a broadcaster and/or to a maker of the display device who may wish to understand their caused environmental impact and/or for the purpose of Scope 3 reporting. The emission intensity can also be presented to the user of the display device for user sensibilization and/or for Scope 2 reporting, should that become mandated.

The electricity that is used by any device can be generated by different power sources - for example, by a traditional coal-fired or gas-fired source of power, by a nuclear source of power, or by renewable sources of power (e.g., solar power, hydropower, or wind power). Each power source has its own carbon footprint (along with other environmental advantages and disadvantages). The availability of each of these power sources varies over time. The availability of solar power depends on sun light. The availability of wind power depends on sufficient wind. The availability of other power sources depends on the operability of the plants that generate them (e.g., stress corrosion in nuclear reactors has caused several nuclear reactors to go offline in France). Consequently, the mix of energy sources - that is, the proportion of power sources contributing to the energy being generated in a region at any given time - is not constant, but may vary. Such change in the energy source mix may be in part predictable and in part unpredictable over longer or shorter time periods. Thus, the intensity of gas emissions - that is, the greenhouse gas emissions produced per unit of electricity - also varies over time as a consequence of the change in the energy source mix.

Furthermore, in some countries, consumers may have the option to choose electricity subscriptions from among different suppliers, or they may choose among different types of electricity subscriptions from the same supplier. Some consumers may use their own private (renewable) energy source, which may cause greenhouse gas emission that is independent of the emission that may be caused when using a local energy provider.

All of these factors contribute to significant uncertainty about the intensity of greenhouse gas emissions associated with the use of electrical devices. And so, users typically cannot tell what the intensity of greenhouse gas emission that is associated with the use of their electrical device at any moment in time. Moreover, companies, such as television makers, broadcasters, and operators of streaming platforms, face significant uncertainty in their required reporting of greenhouse gas emissions.

Aspects described herein include techniques that can be used to associate a greenhouse gas emission amount with the activity of using an electrical device, considering local and temporal parameters affecting that emission. For example, a greenhouse gas emission can be associated with the activity of consuming content by an end-user. Information about the associated greenhouse gas emission can then be reported to a related entity, such as the content provider or the content producer. In another example, a greenhouse gas emission can be associated with the activity of operating an appliance by an end-user. Information about the associated greenhouse gas emission can then be reported to a related entity, such as the distributer, manufacturer, or designer of the appliance. In turn, the entities receiving the greenhouse gas emission reports can use the reports to inform their operation or to inform their technology development and/or for Scope 3 reporting.

Gas emissions are considered to include seven greenhouse gases identified in the Kyoto protocol: carbon dioxide ($CO_2$), methane ($CH_4$), nitrous oxide ($N_2O$). hydrofluorocarbons (HFCs), perfluorocarbons (PFCs), sulfur hexafluoride ($SF_6$), and nitrogen trifluoride ($NF_3$). With suitable conversion factors - known as global warming potentials (GWPs), as defined by the international plant protection convention (IPCC) for a given time horizon - these can be converted into $CO_2$ equivalents, referred to herein as $CO_2$-e.

Carbon intensity is the amount of greenhouse gas emission generated per unit of electricity. Carbon intensity can be measured by SI units, $g/J$, representing unit of mass per unit of energy. That is, the carbon intensity is measured by the mass of the gas emission that is associated with the production or the use of a unit of energy. However, many other units of measurement can be used, including for example: $g\ CO_2$-e / $kWh$, $kg\ CO_2$-e / $kWh$, $lbs\ CO_2$-e / $kWh$, or $t\ CO_2$-e / $MWh$.

FIG. 2 is a flowchart illustrating a method for determining the carbon intensity associated with an electrical device 200. The granularity of the information currently available for any given time and location on the planet varies considerably. Thus, the most accurate information that is available is used to determine the carbon intensity associated with a use of electricity by a device at a given time and at a given location. FIG. 2 demonstrates the selection of the information source used to obtain the carbon intensity that is, in turn, used to derive the emission associated with electricity consumed by a given end-user device.

The method 200 may be applied to query in succession the most local (specific) information first, followed by increasingly more global (coarse) information. Thus, the most local information may be available for end-users who have their own locally produced source of energy 210, based on which the carbon intensity is determined 215. Such energy may come from renewable sources, such as privately owned solar panels or wind turbines, or from diesel generators. If the electrical device is connected to a grid, then a series of queries 220-240 may be carried out to determine what level of information is available. First, it can be queried whether subscription information is available 220. In this case, the used infrastructure may allow the electrical device to query an API about the specific electricity subscription held by the client, then this subscription information can be used to determine the carbon intensity 225. If subscription information is not available, then the presence of a regional energy forecast can be queried 230, and if available, the carbon intensity can be determined based on that regional energy forecast 235. An energy forecast may vary with time since it typically takes into account many factors that affect the current energy mix, such as the weather and the load on the network. If a regional forecast is not available, then a national energy forecast may be queried 240. If available, carbon intensity can be determined based on the national forecast 245. In the absence of a national energy forecast, a predetermined (fixed) value for the carbon intensity can be determined 250 - for example, the national emissions intensity can be used as a default.

According to aspects, if the electricity used to power a display device is from an on-premises source, and if this source is renewable, such as a photovoltaic solar panel or a wind-turbine, then the carbon intensity associated with this power source can be deemed to be zero 215 (although there may be emissions caused by producing and by recycling of the electricity generation equipment itself). However, if the electricity used to power a television device is from an on-premises source, but this source is not renewable, then there are carbon emissions associated with this electricity supply. The most common form of on-premises non-renewable sources of power are diesel generators, as privately owned diesel generators are used extensively in many parts of the world where access to grid electricity is intermittent or absent. To determine the carbon intensity 215 associated with a diesel generator, data measured by the generator or provided by the generator manufacturer can be used. If such data are not available, then an average emission factor can be determined 215 (see, Jakhrani A Q, et al., "Estimation of carbon footprints from diesel generator emissions," 2012 International Conference in Green and Ubiquitous Technology, 2012, hereinafter "Jakhrani"). For example, an average power rating of 3.5 *kW* can be assumed, which produces an average 1.58 *kg* $CO_2$ per *kWh*, according to data interpolated from Table 1 in Jakhrani.

In certain countries, such as France, end-users can connect to one of several suppliers of electricity. These suppliers may offer subscriptions with different features and pricings. For example, a single supplier can offer multiple types of electricity subscriptions; some suppliers exclusively offer electricity that comes 100% from renewable sources; other suppliers offer packages that offer electricity 100% from renewable sources, packages that offer electricity partially from renewable sources, or packages that offer electricity stemming from nuclear of fossil fuel sources. In such a market, the power source mix used to supply electricity to any given home depends therefore on the subscription taken by its occupant.

One way in which subscription information can be made available is via the electricity meter. In France, for example, most homes are equipped with a Linky electricity meter. This meter can be read remotely, and Enedis (the power grid operator in France) provides an API with which the meter's measured data can be read. Among the information that can be read are account information and usage information. That API could be extended with the necessary information to enable a client to determine the nature of the subscription. If the subscription information indicates that the electricity purchased by the account holder is 100% renewable, then the carbon intensity can be determined 225 to be zero. If the subscription information indicates a specific power source mix, the carbon intensity C can be determined 225 as:

$$C = (uC_{coal} + xC_{nuclear} + yC_{solar} + zC_{wind}) \qquad (1)$$

where $C_{coal}$, $C_{nuclear}$, $C_{solar}$, and $C_{wind}$ represent the carbon intensity attributed, respectively, to a coal power source, a nuclear power source, a solar power source, and a wind power source; and where the distribution of power sources in percentage is u for coal, x for nuclear, y for solar, and z for wind.

The carbon intensity for an individual consumer (or consumer device) may be derived from a regional forecast 235, for example made available through an API. An example is the API made available in the United Kingdom by the National GRID ESO, which measures and makes available the carbon intensity for 14 geographical regions in Great Britain (see, National Grid ESO, 'Carbon Intensity API', https://carbonintensity.org.uk/, retrieved 24-4-2024). In a second example, France's electricity transmission network (RTE) makes regional data available on its website (see, RTE, 'Télécharger les indicateurs', https://www.rte-france.com/eco2mix/telecharger-les-indicateurs). It also offers an API (see, RTE, 'Generation forecast', https://data.rte-france.com/catalog/-/api/generation/Generation-Forecast/v2.1). A third example is Grid Status which has an API through which regional electricity data, including carbon intensity, can be accessed in the United States (see, Grid Status, https://www.gridstatus.io/). The values retrieved through such APIs vary according to geographical location as well as time, because the power source mix changes over time and typically depends on the current load, the availability of sun light, wind, and hydropower, as well as on outages (either scheduled or unscheduled).

If regional forecasts are not available for a particular region or country, then a national forecast may be used instead to determine the carbon intensity 245. Such data are currently available through APIs, for example from Electricity Maps (see, https://www.electricitymaps.com) or WattTime (see, https://watttime.org) which cover large parts of the world (and offer regional data in the United States). While this data is geographically less granular than the regional forecasts described above, they do take into account temporal factors such as the availability of sun light, wind, hydropower, and the occurrence of (scheduled and unscheduled) outages.

If no data are available from regional or national forecasts, then, as a last resort, carbon intensity can be determined based on a predetermined (default) value 250, such as the national gas emissions intensity. This is a static value that represents the average carbon intensity of a given country. As an example, a database with country-level carbon intensity information can be purchased from the IEA (see, "Emission factors 2023," https://www.iea.org/data-and-statistics/data-product/emissions-factors-2023), or it can be derived from data presented by Our World in Data (see, "Carbon intensity of electricity generation," https://ourworldindata.org/grapher/carbon-intensity-electricity).

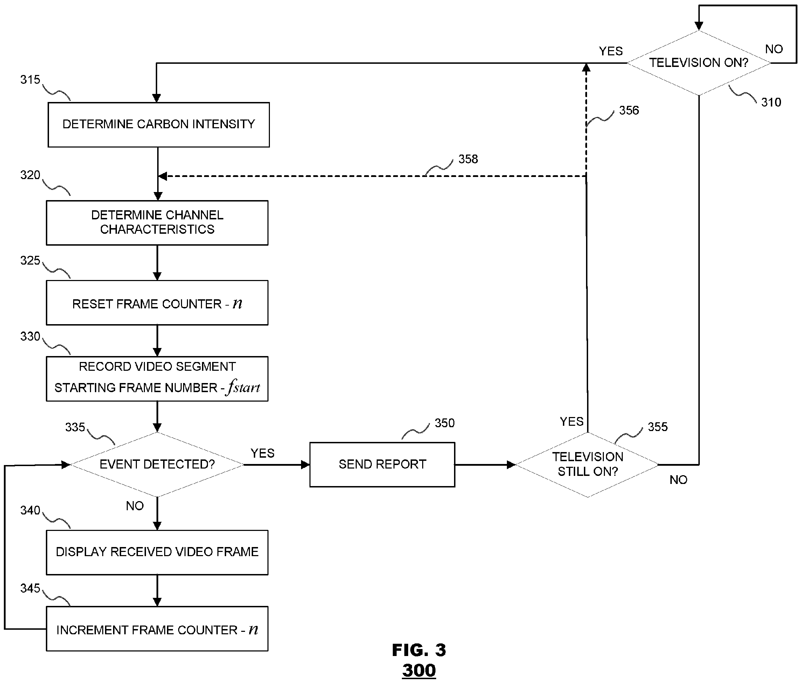

FIG. 3 is a flowchart illustrating a first method for tracking carbon emission caused by content consumption 300. A display device (e.g., a television) can be configured to generate reports having information indicative of emissions caused by the displaying of a content and to send these reports to the content provider (e.g., a broadcaster, a streaming platform operator, or any other content distributer) or to the device maker. The content provider can use the received reports to generate a Scope 3 emission report, while the device maker can use the reports to improve the energy consumption of the device, for example.

As demonstrated in FIG. 3, when a television is turned on 310, the carbon intensity is determined in step 315 (e.g., as described with respect to FIG. 2). In step 320, the viewed video channel characteristics are determined. For example, identifying the channel currently viewed may enable identifying the content played (e.g., a movie, a TV show, a news coverage, a commercial), that is, the content the emission report corresponds to. In step 325, a frame counter, denoted $n$, is reset to zero. Then, in step 330, the starting frame number of a video segment, denoted $f_{start}$, is recorded. In step 335, if no event is detected 335, the current frame (starting with $f_{start}$) from the video of the viewed channel is received and displayed in step 340. Next, in step 345, the frame counter is incremented, $n = n + 1$, and if no event is detected yet, the next frame from the video of the viewed channel is received and displayed in step 340, and so on. When an event is detected, in step 335, an emission report (generated as further described below) is sent in step 350. Notice that the occurrence of an event delineates a video segment, identified by $f_{start}$ and $n$, that the sent emission report corresponds to.

An event, that may trigger the sending 350 of an emission report, may be the end of a program segment, the switch to another channel, the switch into a commercial, the elapsing of a predetermined period of time, or a combination thereof. Generally, the frequency of sending emission reports should be as small as possible to reduce the amount of data traffic, thereby, limiting energy consumption associated with the reporting activity itself. In an aspect, the frequency of sending emission reports may be controlled by determining the type of events that may trigger (in step 335) the transmission of a report 350.

As illustrated in FIG. 3, following the transmission of an emission report 350, if the television is still on, then steps 320-345 can be carried out until a new event is detected 335, which triggers the transmission of a new emission report. As explained above, the carbon intensity may vary over time due to changes in the power source(s) that supply the electricity to the display device. Therefore, in an aspect, following the transmission of an emission report 350, if the television is still on 355, also step 315 may be carried out. Thus, carbon intensity can be determined 315 either only once after the television is switched on 310 (following loop 358) or it can be determined 315 after each emission report is sent 350 (following loop 356).

According to aspects, the emission reports described herein can be sent 350 to the content provider either via a return channel, an IP network, a managed IP network, satellite uplink, mobile network, or any other communication means. The information included in the emission report can be encoded in a variety of different formats, either human readable or only machine readable. The emission report can be formatted as an XML message, a binary message (with or without an ASCII or a binary header), a HTML, or a JSON. Furthermore, the CMCD standard (Common Media Client Data), defined in CTA-5004 (https://cdn.cta.tech/cta/media/media/resources/standards/pdfs/cta-5004-final.pdf), can be augmented with syntax appropriate for the reporting described here.

According to further aspects, the emission reports described herein can be encoded in a secure manner, so that the mechanism presented here cannot be used for attacks and so that false reports can be detected and ignored. To that end, an encryption scheme can be employed. Furthermore, the reports sent back to the content provider can be sent in an anonymous manner, to protect the privacy of the owner of the reporting device. In particular, the reports may not be linked to personal information, account information, or any other information that can identify the viewer and/or reveal the viewer's viewing behavior. The primary purpose of the emission reports is to provide more accurate reporting of emissions caused by consuming content.

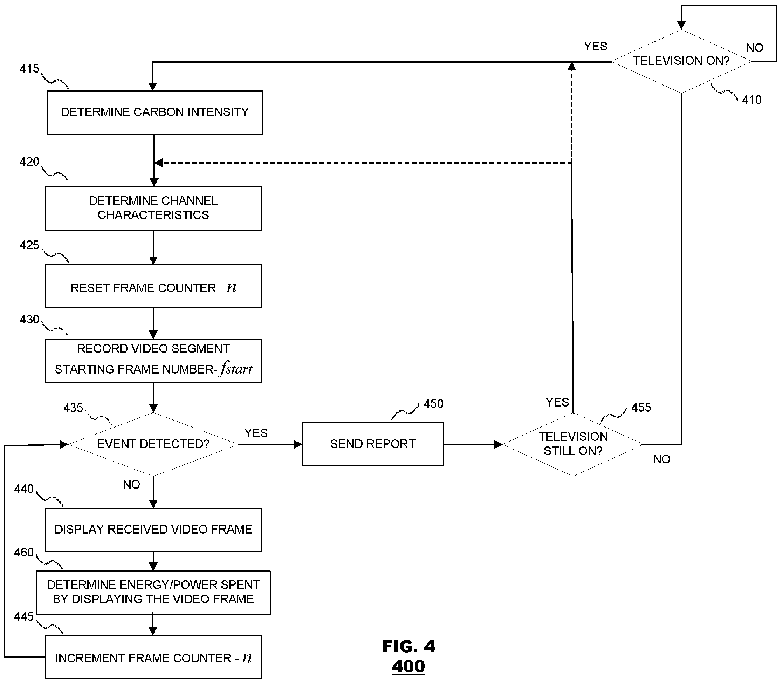

FIG. 4 is a flowchart illustrating a second method for tracking carbon emission caused by content consumption 400. Just as described with respect to FIG. 3, applying method 400, a display device can be configured to generate reports having information indicative of emissions caused by displaying content and to send these reports to the content provider or the device maker. Thus, steps 410-455 of method 400 are similar in their operation to corresponding steps 310-355 of method 300; however, step 460 further extends method 300. In step 460, the energy (or power) that is spent for displaying the received video frame 440 can be determined. In an aspect, such energy (or power) can be measured by dedicated hardware component(s) that can be built into the device displaying the received video frame. In another aspect, such energy (or power) can be estimated based on pixel intensities of the received video frame, device information (e.g., display technology and/or parameters), or any other information accessible to the device. While the former approach may be costlier than the latter approach, it is more direct and so more likely to be accurate in determining the energy (power).

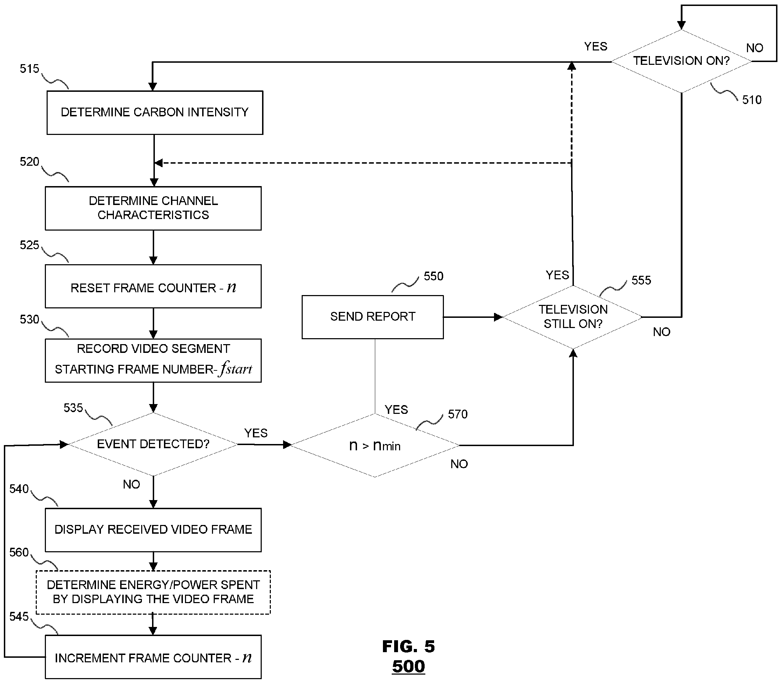

FIG. 5 is a flowchart illustrating a third method for tracking carbon emission caused by content consumption 500. Just as described with respect to FIG. 3 and FIG. 4, applying method 500, a display device can be configured to generate reports having information indicative of emissions caused by displaying content and to send these reports to the content provider or the device maker. Thus, steps 510-555 of method 500 are similar in their operation to corresponding steps 310-355 of method 300 and corresponding steps 410-455 of method 400, and step 560 (if present) operates as step 460. However, step 570 further extends methods 300 and 400. In step 570, only if the frame counter is larger than a minimal value, $n_{min}$, a report is sent in step 550. Consequently, if the time spent on viewing a video segment of a channel (since the last time a report was sent 550) corresponds to a number of frames that is less than a minimum number of frames, $n_{min}$, a report corresponding to that time will not be sent. This allows the number of reports to be reduced in the case that a viewer is quickly switching from one channel to another.

The tracking of emissions caused by content consumption, according to the example methods 300, 400, 500 described herein, facilitates the generation of emission reports. These emission reports may be of different types. Each type of report may include different combinations of data elements, based on which the emission amount, caused by displaying content during a corresponding time period, can be derived. Typically, an emission report, denoted $R$, identifies a viewed channel and a video segment (from the viewed channel) the report corresponds to. Such information enables the content provider to associate the reported emission with a certain program of a certain channel. Two types of reports are demonstrated herein, namely report type A and report type B.

An emission report of type A may include the following data elements.

- Channel characteristics, including a channel name and its address (e.g., as determined in steps 320, 420, 520). Based on this information, the emission caused by viewing content produced by the identified channel can be directed to (or associated with) the entity controlling the channel, for example.

- Video segment identification, including the starting frame number, $f_{start}$, of the video segment and the number of frames $n$ in the video segment (or, equivalently, start- and end- timestamps). Based on this information, the video segment that the report corresponds to can be identified.

- Device information, including, for example, image resolution of the display, the type of the display (e.g., the display technology such as OLED or LCD), and the used parameter(s) of the display. As relevant to the display type, the display parameters may include parameters such as gamma y, display primaries, display white, peak power used per primary, peak luminance, and/or average peak luminance per a number of frames.

- Carbon intensity, denoted C (e.g., as determined in steps 315, 415, 515).

An emission report of type B may include the following data elements:

- Channel characteristics, including a channel name and its address (e.g., as determined in steps 320, 420, 520). Based on this information, the emission caused by viewing content produced by the identified channel can be directed to (or associated with) the entity controlling the channel, for example.

- Video segment identification, including the starting frame number, $f_{start}$, of the video segment and the number of frames $n$ in the video segment (or, equivalently, start- and end- timestamps). Based on this information, the video segment that the report corresponds to can be identified.

- Emission amount caused by displaying the video segment, denoted G. Alternatively, the energy (or power) used to display the video segment, denoted E (or P) and the carbon intensity C (e.g., as determined in steps 315, 415, 515) can be reported.

Hence, a report of type A may include device information, based on which a content provider (receiving this report) can estimate the energy spent to display a respective video segment. Based on that estimated energy, $\hat{E}$, and the reported carbon intensity, C, the content provider can obtain the emission caused by displaying the video segment - that is, $G = C\hat{E}$. A report of type B omits device information, but instead directly reports the emission G, or directly reports the energy E (or power P) and the carbon intensity C based on which G can be computed by the content provider.

Generating a report of type B may require additional processing to compute the energy E (or the power P) that is spent by the device during the displaying of a corresponding video segment. In an aspect, this additional processing may include determining of the energy (or power) consumed by each frame of the video segment (e.g., as performed by step 460 or 560). Despite the additional processing involved, generating a report of type B may be advantageous, from a device maker perspective, as no device-specific information has to be transmitted.

According to aspects, data elements from both report types can be combined to form other report types. For example, in another type of report, the carbon intensity C may not be included. In such a case, the content provider may use values for C obtained from another source or locally determined. For example, to obtain the carbon intensity C, the content provider may use a regional forecast 230, 235 (if the region from where the report is being sent is known), use a national forecast 240, 245, or use a fixed carbon emission intensity 250.

In addition, other information may be added to the reports, should this become necessary for increasing the accuracy or the flexibility in obtaining the emission amount caused by the consumption of content by displaying devices. In an aspect, the power sources used by the display device while playing a corresponding video segment can be added to the emission report. For example, if the power source is a solar panel on the roof of the end-user's residence (or other renewable sources) this can be flagged in the report.

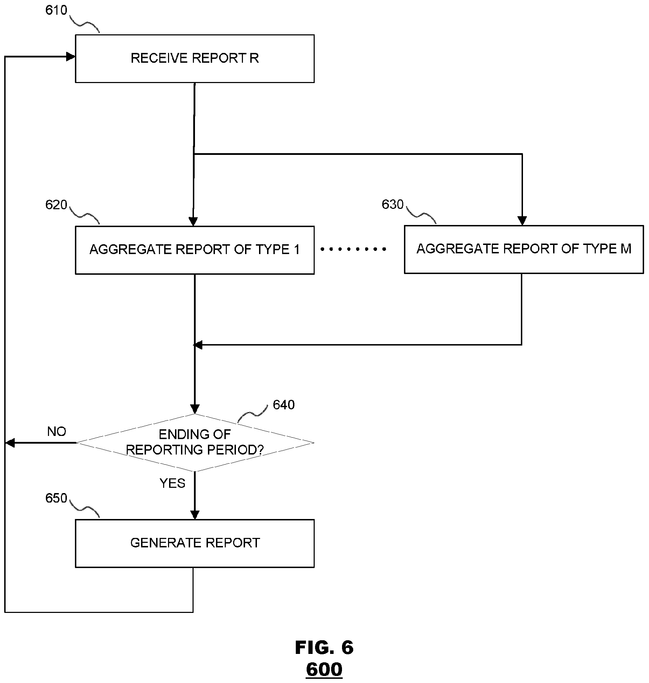

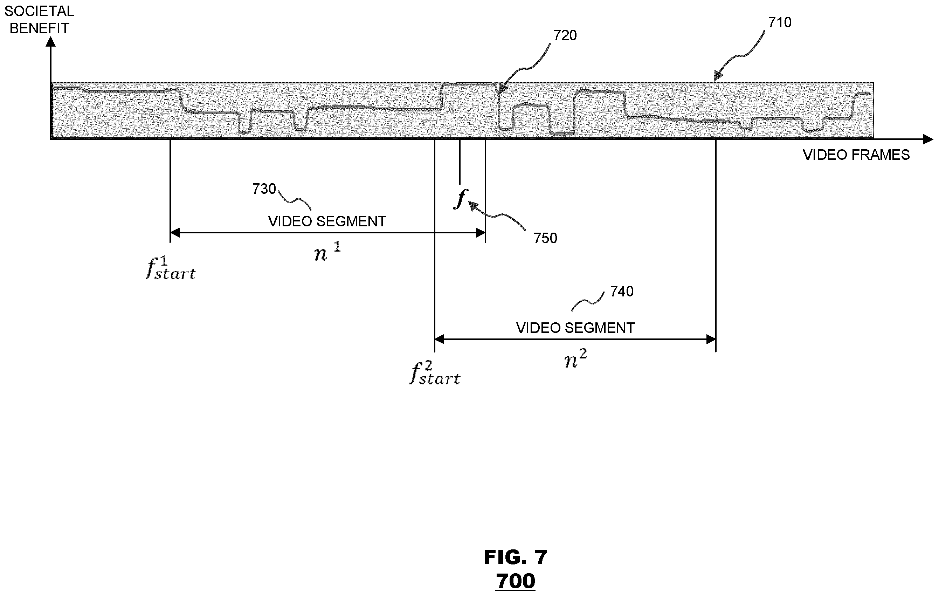

A content provider, during the distribution of content to end-user devices, may receive emission reports from these devices that correspond to (overlapping and not overlapping) video segments from the content viewed. According to aspects, the content provider may integrate information from the received reports to generate therefrom the emission amount associated with the distributed content, as further described below with reference to FIG. 6 and FIG. 7.

FIG. 6 is a flowchart illustrating a first method for integrating emission reports received from consumers of content 600. Applying the method 600, a content provider (e.g., broadcasting or streaming the content) can aggregate information in emission reports (e.g., received from devices displaying the content) according to their types. As demonstrated by the example of FIG. 6, in step 610, a report R is received. Such a report may be of type m, that is, one of possible $M$ reports (e.g., m = 1 may correspond to a type A report and m = $M$ may correspond to a type B report). The information provided by the received report R is aggregated with previously received reports of the same type. For example, if $R$ is of type 1, in step 620, information from that report will be aggregated with reports of type 1 previously received. Similarly, if $R$ is of type M, in step 630, information from that report will be aggregated with reports of type M previously received. Next, if a reporting period has not ended 640, the next report R is received 610 and processed in steps 620-630. If the reporting period ended 640, a report representing the emission caused during the reporting period is generated 650 based on the aggregated reports 620-630. The reporting period can be determined as the end of a day, a week, or any other period of time, for example, corresponding to a certain event the impact of which is to be assessed (e.g., Olympics game coverage).

In an aspect, aggregating information of K reports of type A may be formulated as follows.

$$G_{Total} = \sum_{k=1}^{K} C^k \hat{E}^k, \qquad (2)$$

where $C^k$ is the carbon intensity provided by report k, where $\hat{E}^k$ is the energy estimated based on device information provided by report k; and where $G_{Total}$ is the emission amount caused by displaying the content during a reporting period based on the received reports of type A.

In another aspect, aggregating information of K reports of type B may be formulated as follows.

$$G_{Total} = \sum_{k=1}^{K} G^k, \qquad (3)$$

where $G^k$ is the carbon emission intensity provided by report k; and where $G_{Total}$ is the emission amount caused by displaying the content during a reporting period based on the received reports of type B. Alternatively, when instead of $G^k$, the energy $E^k$ and the carbon intensity $C^k$ are provided by a report of type B, then $G^k$ can be replaced by $C^k E^k$. Similarly, when instead of $G^k$, the power $P^k$ and the carbon intensity $C^k$ are provided by a report of type B, then $G^k$ can be replaced by $C^k P^k / r$, where r is the frame rate of the video segment report k corresponds to.

FIG. 7 is a diagram illustrating a second method for integrating emission reports received from consumers of content 700. FIG. 7 demonstrates a content 710 to be broadcasted or streamed to end-users' display devices. The content is characterized by a societal benefit, denoted $s_f$, shown by a graph 720. The societal benefit can be a number (e.g., between 0 and 1) that measures the societal importance of the corresponding content. Such characterization allows programs (within the content 710) to be differentiated into categories which are more useful or less useful (valuable) to society. Accordingly, a program educating the public about climate change probably has a high societal benefit, whereas a commercial probably has a low societal benefit (see, European Patent Application 24305523.3, filed April 4, 2024, the content of which is incorporated herein in its entirety). In an aspect, when a segment of content has a high societal benefit, the emission caused by its viewing may be tolerated to a larger degree.

FIG. 7 additionally shows video segments 730, 740 for which emission reports are being received from end-users' display devices. For example, with respect to a video segment 730, starting with frame $f_{start}^1$ and having $n^1$ frames, a report of type A (or B) may be received from an end-user display device. And, with respect to a video segment 740, starting with frame $f_{start}^2$ and having $n^2$ frames, a report of type B (or A) may be received from the same or another end-user display device. According to aspects, reports can be aggregated with respect to each frame $f$ (e.g., 750) that is present within video segments the reports correspond to (e.g., 730 or 740), as described below.

The emission associated with a frame $f$ - that is, $G_f$ - can be computed as follows:

$$G_f = (1 - s_f) \sum_{k=1}^{K_f} \frac{G^k}{n^k}, \qquad (4)$$

Where $k$ is one report, $R^k$, out of $K_f$ received reports that include frame $f$; where $G^k$ is the emission caused by displaying the video segment that report $R^k$ corresponding to; where $n^k$ is the number of frames in that video segment; and where $s_f$ is the societal benefit of frame $f$. In an aspect, the societal benefit may not be considered (i.e., $s_f=0$). Thus, the emission amount associated with a content 710 including F frames is:

$$G_{Total} = \sum_{f=1}^{F} G_f, \qquad (5)$$

In another aspect, an initial value of $G_f$ (e.g., $G_f = 0$) can be updated each time a new report $R^k$ is received. In this case, upon reception of a new report $R^k$, the value of $G_f$ can be updated for each frame $f$ included in the video segment the new report $R^k$ corresponds to, that is, for each $f \in [f_{start}, f_{start} + n]$, as follows:

$$dG_f = \left(1 - s_f\right)\frac{G^k}{n^k} \qquad (6)$$

$$G_f = G_f + dG_f \qquad (7)$$

$$G_{total} = G_{total} + dG_f \qquad (8)$$

Notice that the carbon emission $G^k$ (used in equations (4) and (6)) can be readily available from report $R^k$ (e.g., when it is of type B). However, when $G^k$ is not reported in $R^k$ the following options can be carried out:

1) $G^k$ can be replaced by $C^k E^k$, assuming $E^k$ is provided by report $R^k$ (e.g., when it is of type B) or $E^k$ can be estimated (obtaining $\hat{E}^k$) based on device information reported in $R^k$ (e.g., when it is of type A);

2) $G^k$ can be replaced by $C^k P^k/r$, assuming $P^k$ and $r$ are provided by report $R^k$ (e.g., when it is of type B), where r is the frame rate of the corresponding video segment;

3) $G^k$ can be estimated by the content provider (e.g., as proposed in EP24305262.8).

If the carbon intensity $C^k$ is not reported in $R^k$, it can be determined using a regional forecast 230, 235 (if the geographical region from where the report is being sent is known), using a national forecast 240, 245, or using a fixed carbon emission intensity 250.

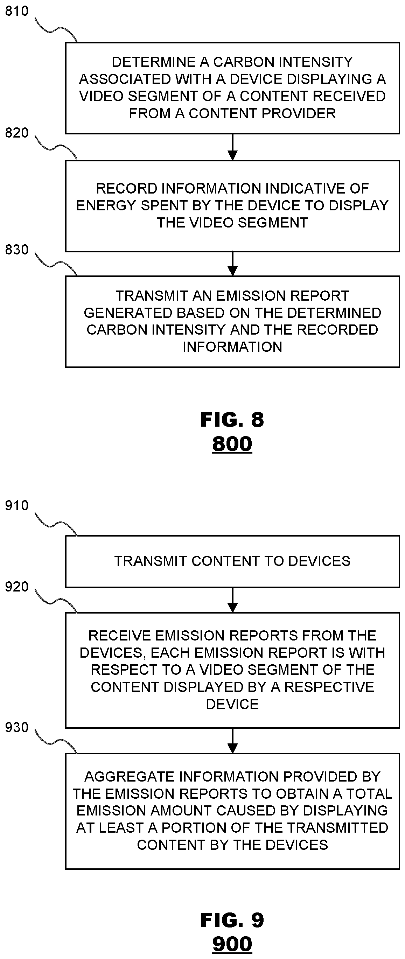

FIG. 8 is a flowchart illustrating a method for generating information regarding carbon emission caused by consumption of content 800. According to aspects, in step 810, a carbon intensity C, associated with a device displaying a video segment of content received from a content provider, can be determined. As described in reference to FIG. 2, the carbon intensity can be determined based on a location of the device displaying the content and/or on a time of day of displaying the content. In an aspect, the carbon intensity can be determined based on one or more power sources supplying electricity to the device displaying the content (see equation (1)). In step 820, information indicative of energy spent by the device to display the video segment can be recorded. In an aspect, the recorded information contains information describing the device, including one or more of a resolution, a type, and a parameter of the device. In another aspect, the recorded information contains a determined energy (or power) spent by the device to display the video segment. In step 830, an emission report can be transmitted to the content provider. The emission report is generated based on the determined carbon intensity and the recorded information. The generated report can also include information identifying a channel producing the content and information identifying the video segment.

FIG. 9 is a flowchart illustrating a method for aggregating information regarding carbon emissions caused by distribution of content. According to aspects, in step 910, content can be transmitted to devices of end-users. In step 920, emission reports can be received from the devices. Each of the received emission reports is with respect to a video segment of the content displayed by a respective device. In step 930, information provided by the emission reports can be aggregated to obtain an emission amount $G_{Total}$ caused by displaying at least a portion of the transmitted content by the devices (e.g., see equations (2), (3), or (5)).

In a first aspect, a received emission report $R^k$ can include an emission amount $G^k$ caused by displaying a respective video segment. In a second aspect, a received emission report $R^k$ can include carbon intensity $C^k$ and energy $E^k$ spent to display a respective video segment, based on which the emission amount can be derived (e.g., $G^k = C^k E^k$). In a third aspect, a received emission report $R^k$ can include carbon intensity $C^k$ and power $P^k$ spent to display a respective video segment, based on which the emission amount can be derived (e.g., $G^k = C^k P^k / r$). In a fourth aspect, a received emission report $R^k$ can include carbon intensity $C^k$ and information describing the device, in which case the emission amount can be derived by first estimating the energy based on the information describing the device, that is, $E^k$, and then the emission amount can be derived based on the carbon intensity $C^k$ and the estimated energy $\hat{E}^k$ (e.g., $G^k = C^k \hat{E}^k$).

As described herein with respect to FIG. 7, the method 900 can be applied to aggregate emission amounts caused by displaying a video frame $f$ of the content. Thus, as explained with respect to equation (4), for a subset of received emission reports that are with respect to video segments including the video frame (i.e., a subset of $K_f$ reports), emission amounts that are attributed to one frame can be added (to obtain $G_f$). Where, for a report of that subset, a respective emission amount that is attributed to one frame is obtained by dividing an emission amount $G^k$ (derived from information provided by the report) by the number of frames in a respective video segment $n^k$.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

**1.** A method, comprising:

determining a carbon intensity associated with a device displaying a video segment of a content received from a content provider;
recording information indicative of energy spent by the device to display the video segment; and
transmitting an emission report generated based on the determined carbon intensity and the recorded information.

**2.** An apparatus, comprising:

at least one processor; and
memory storing instructions that, when executed by the at least one processor, cause the apparatus to:

determine a carbon intensity associated with a device displaying a video segment of a content received from a content provider,
record information indicative of energy spent by the device to display the video segment, and
transmit an emission report generated based on the determined carbon intensity and the recorded information.

**3.** The method according to claim 1 or the apparatus according to claim 2, wherein the carbon intensity is determined based on one or more power sources supplying electricity to the device displaying the video segment.

4. The method according to claims 1 or 3 or the apparatus according to claim 2 or 3, wherein the carbon intensity is determined based on at least one of a location of the device displaying the content and a time of day of displaying the content.

5. The method according to any one of claims 1 and 3-4 or the apparatus according to any one of claims 2-4, wherein the generated report further comprises information identifying a channel producing the content.

6. The method according to any one of claims 1 and 3-5 or the apparatus according to any one of claims 2-5, wherein the generated report further comprises information identifying the video segment.

7. The method according to any one of claims 1 and 3-6 or the apparatus according to any one of claims 2-6, wherein the recorded information comprises information describing the device, including one or more of a resolution, a type, or a parameter of the device.

8. The method according to any one of claims 1 and 3-7 further comprising or the apparatus according to any one of claims 2-7 wherein the instructions further cause the apparatus to perform:
determining energy or power spent by the device to display the video segment, wherein the recorded information comprises the determined energy or power.

9. A method, comprising:

transmitting content to devices;
receiving emission reports from the devices, each emission report is with respect to a video segment of the content displayed by a respective device; and
aggregating information provided by the emission reports to obtain an emission amount caused by displaying, by the devices, at least a portion of the transmitted content.

10. An apparatus, comprising:

at least one processor; and
memory storing instructions that, when executed by the at least one processor, cause the apparatus to:

transmit content to devices,
receive emission reports from the devices, each emission report is with respect to a video segment of the content displayed by a respective device, and
aggregate information provided by the emission reports to obtain an emission amount caused by displaying, by the devices, at least a portion of the transmitted content.

11. The method according to claim 9 or the apparatus according to claim 10, wherein an emission report, of the received emission reports, includes:
an emission amount caused by displaying a respective video segment.

12. The method according to claim 9 or the apparatus according to claim 10, wherein an emission report, of the received emission reports, includes a carbon intensity and an energy spent to display a respective video segment, and wherein the method further comprising, or the instructions further cause the apparatus to perform:
deriving an emission amount caused by displaying the video segment based on the carbon intensity and the energy.

13. The method according to claim 9 or the apparatus according to claim 10, wherein an emission report, of the received emission reports, includes a carbon intensity and a power spent to display a respective video segment, and wherein the method further comprising, or the instructions further cause the apparatus to perform:
deriving an emission amount caused by displaying the video segment based on the carbon intensity and the power.

14. The method according to claim 9 or the apparatus according to claim 10, wherein an emission report, of the received emission reports, includes a carbon intensity and information describing the device, and wherein the method further comprising, or the instructions further cause the apparatus to perform:

estimating an energy spent to display the video segment based on the information describing the device; and deriving an emission amount caused by displaying the video segment based on the carbon intensity and the estimated energy.

15. The method according to any one of claims 9 and 11-14 or the apparatus according to any one of claims 10-14, wherein the aggregating comprises aggregating emission amounts caused by displaying a video frame of the content, comprising:

for a subset of the received emission reports that are with respect to video segments including the video frame, adding respective emission amounts that are attributed to one frame,

wherein, for a report of the subset, a respective emission amount that is attributed to one frame is obtained by dividing an emission amount, derived from information provided by the report, by the number of frames in a respective video segment.

FIG. 1
100

FIG. 2
200

TELEVISION ON?  YES  NO

315 — DETERMINE CARBON INTENSITY

356

358

310

320 — DETERMINE CHANNEL CHARACTERISTICS

325 — RESET FRAME COUNTER - $n$

330 — RECORD VIDEO SEGMENT STARTING FRAME NUMBER - $fstart$

335 — EVENT DETECTED?   YES   NO

350 — SEND REPORT

355 — TELEVISION STILL ON?   YES   NO

340 — DISPLAY RECEIVED VIDEO FRAME

345 — INCREMENT FRAME COUNTER - $n$

**FIG. 3**
**300**

EP 4 686 209 A1

TELEVISION ON? 410
NO
YES

415 DETERMINE CARBON INTENSITY

420 DETERMINE CHANNEL CHARACTERISTICS

425 RESET FRAME COUNTER - $n$

430 RECORD VIDEO SEGMENT STARTING FRAME NUMBER- $f_{start}$

435 EVENT DETECTED?
YES
NO

440 DISPLAY RECEIVED VIDEO FRAME

460 DETERMINE ENERGY/POWER SPENT BY DISPLAYING THE VIDEO FRAME

445 INCREMENT FRAME COUNTER - $n$

450 SEND REPORT

455 TELEVISION STILL ON?
YES
NO

FIG. 4
400

18

EP 4 686 209 A1

515 — DETERMINE CARBON INTENSITY

510 — TELEVISION ON? — YES / NO

520 — DETERMINE CHANNEL CHARACTERISTICS

525 — RESET FRAME COUNTER - $n$

530 — RECORD VIDEO SEGMENT STARTING FRAME NUMBER- $f_{start}$

535 — EVENT DETECTED? — YES / NO

550 — SEND REPORT

555 — TELEVISION STILL ON? — YES / NO

570 — $n > n_{min}$ — YES / NO

540 — DISPLAY RECEIVED VIDEO FRAME

560 — DETERMINE ENERGY/POWER SPENT BY DISPLAYING THE VIDEO FRAME

545 — INCREMENT FRAME COUNTER - $n$

**FIG. 5**
**500**

**FIG. 6**
**600**

**FIG. 7**
**700**

810

DETERMINE A CARBON INTENSITY ASSOCIATED WITH A DEVICE DISPLAYING A VIDEO SEGMENT OF A CONTENT RECEIVED FROM A CONTENT PROVIDER

820

RECORD INFORMATION INDICATIVE OF ENERGY SPENT BY THE DEVICE TO DISPLAY THE VIDEO SEGMENT

830

TRANSMIT AN EMISSION REPORT GENERATED BASED ON THE DETERMINED CARBON INTENSITY AND THE RECORDED INFORMATION

**FIG. 8**
**800**

910

TRANSMIT CONTENT TO DEVICES

920

RECEIVE EMISSION REPORTS FROM THE DEVICES, EACH EMISSION REPORT IS WITH RESPECT TO A VIDEO SEGMENT OF THE CONTENT DISPLAYED BY A RESPECTIVE DEVICE

930

AGGREGATE INFORMATION PROVIDED BY THE EMISSION REPORTS TO OBTAIN A TOTAL EMISSION AMOUNT CAUSED BY DISPLAYING AT LEAST A PORTION OF THE TRANSMITTED CONTENT BY THE DEVICES

**FIG. 9**
**900**

Europäisches
Patentamt
European
Patent Office
Office européen
des brevets

## EUROPEAN SEARCH REPORT

**Application Number**

**EP 24 30 6247**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JULIEN LEMOTHEUX ORANGE: "CM2229_EADC Study Mission Report", DVB, DIGITAL VIDEO BROADCASTING, C/O EBU - 17A ANCIENNE ROUTE - CH-1218 GRAND SACONNEX, GENEVA - SWITZERLAND , 14 June 2023 (2023-06-14), XP017865750, Retrieved from the Internet: URL:https://member.dvb.org/wg/CM/documentRevision/download/49268 CM2229_EADC Study Mission Report.doc [retrieved on 2023-06-14] * the whole document * ----- | 1-15 | INV. H04N21/442 G06Q10/06 H04N21/466 H04N21/658 |
| A | DOCUMENT 6C/TEMP/212(REV 1): "Question ITU-R 147/6;G-716", ITU-T DRAFT; STUDY PERIOD 2021-2024; STUDY GROUP 05; SERIES G-716, INTERNATIONAL TELECOMMUNICATION UNION, GENEVA ; CH , vol. ties/05 19 April 2023 (2023-04-19), pages 1-14, XP044393036, Retrieved from the Internet: URL:https://www-api.itu.int/ifa/t/2022/sg05/docs/230613/td/ties/gen/T22-SG05-230613-TD-GEN-0716!!ZIP-E.zip G-716_att.docx [retrieved on 2023-04-19] * page 10 - page 11; figure 4 * ----- | 1-15 | |

**TECHNICAL FIELDS SEARCHED (IPC)**

H04N
G06Q

The present search report has been drawn up for all claims

| Place of search | Date of completion of the search | Examiner |
|---|---|---|
| Munich | 9 January 2025 | Schneiderlin, Jean |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24305262
- EP 24315189
- EP 24305523

**Non-patent literature cited in the description**

- **JAKHRANI A Q et al.** Estimation of carbon footprints from diesel generator emissions. *2012 International Conference in Green and Ubiquitous Technology*, 2012
- Carbon Intensity API. *National Grid ESO*, 24 April 2024, https://carbonintensity.org.uk
- Télécharger les indicateurs. *RTE*, https://www.rte-france.com/eco2mix/telecharger-les-indicateurs
- Generation forecast. *RTE*, https://data.rte-france.com/catalog/-/api/generation/Generation-Forecast/v2.1
- *Grid Status*, https://www.gridstatus.io/
- *Emission factors 2023*, https://www.iea.org/data-and-statistics/data-product/emissions-factors-2023
- *Carbon intensity of electricity generation*, https://ourworldindata.org/grapher/carbon-intensity-electricity